# EUROPEAN PATENT APPLICATION

(11) **EP 3 226 488 A1**
(43) Date of publication of application: **04.10.2017**
(21) Application number: 16163478.7
(22) Date of filing: 01.04.2016
(51) Int. Cl.: H04L 12/58, H04W 4/00, H04W 4/22

(54) **METHOD FOR HANDLING EMERGENCY MESSAGES**

(71) Applicant: Gemalto M2M GmbH, 81541 München (DE)
(72) Inventor: WESTERKOWSKY, Frank, 10717 Berlin (DE); ULRICH, Thomas, 67098 Bad Dürkheim (DE); LAMPART, Thomas, 13585 Berlin (DE)
(74) Representative: Grevin, Emmanuel

(57) **Abstract**

The present invention relates to a method for handling emergency messages received by a communication equipment from a base node, where the communication equipment is camping on the base node being part of a cellular network, the communication equipment comprising a memory unit wherein at least one capability profile, comprising a set of handling actions, is stored, comprising the steps, upon receiving of an emergency message at the communication equipment, of:
- identifying a warning type from the emergency message,
- selecting based on said warning type from the stored capability profile a handling action,
- initiating the selected handling action.

## Description

### FIELD OF THE INVENTION

The present invention relates to a method for handling emergency messages.

The invention also pertains to a communication equipment using said method. The invention further relates to system comprising such communication equipment.

### BACKGROUND OF THE INVENTION

Wireless communication systems are known since a while for providing telecommunication services to end users. Besides the commonly known telecommunication services like voice telephony, short messaging or IP based data exchange, many cellular networks are meanwhile configured to carry out emergency messaging. This is in particular the case in areas with risks of earthquakes, tsunamis, flooding etc.

Said cellular networks support an emergency messaging service, in particular the so-called Earthquake and Tsunami Warning System (ETWS) described in particular in 3GPP TS 22.168 V8.0.0 and 3GPP TR 23.828 V8.0.0. The content of these documents is considered as basis of present invention, and therefore not reiterated. This ETWS is a cell-broadcast service which informs all devices registered in a certain notification area covered by the respective cellular network about an imminent emergency situation, in particular an earthquake and/or tsunami.

All persons that have a mobile handset thus get a primary information message displayed on the screens of the mobile handsets, and the persons can then take the necessary individual steps, e.g. leave the house, stay away from the beach etc. or those indicated by a second information message from the emergency messaging service.

What is not foreseen in the presently known solutions is the fact, that a growing number of communication equipments operating in cellular networks exists, that do not have any type of display where such warnings could be shown. Moreover, for many of them not even human persons are present which regularly monitor them. This is in particular the case for so-called machine to machine (M2M) communication equipments.

Such communication equipments are operating in the cellular network and would also receive the emergency messages, but have no means to react. Nonetheless it would be advantageous for many M2M communication equipments to take appropriate measures in response to an emergency message, in order to prevent further harm to people and property.

It is therefore the goal of present invention to propose a solution for an improved handling of such emergency messages by a communication equipment, in particular a machine to machine communication equipments. Further alternative and advantageous solutions would, accordingly, be desirable in the art.

### SUMMARY OF THE INVENTION

For this it is according to a first aspect of the invention suggested a method for handling emergency messages received by a communication equipment according to claim 1. It is further suggested according to a second aspect of the invention a communication equipment according to claim 7. It is further proposed according to the third aspect of the invention a system according to claim 14.

According to the first aspect of the invention it is proposed a method for handling emergency messages received by a communication equipment from a base node, where the communication equipment is camping on the base node being part of a cellular network, the communication equipment comprising a memory unit wherein at least one capability profile, comprising a set of handling actions, is stored, comprising the steps, upon receiving of an emergency message at the communication equipment, of:
- identifying a warning type from the emergency message,
- selecting based on said warning type from the stored capability profile a handling action,
- initiating the selected handling action.

The invention is based on the commonly known architecture of cellular networks, in particular according to wireless cellular technology standards like GSM, UMTS and LTE and beyond. As part of that, communication equipments are communicating with the cellular networks over the air interface via base nodes of the cellular networks, resp. NodeB or eNodeB, in the following called base node without intended limitation in terms of supported technology standard. The communication equipment is in particular camping on a base node, and as such operating in a cellular network.

Such communication equipment is preferably rather than a handset a so-called machine-to-machine (M2M) device like a vending machine, an asset tracker, an electronic meter, a home security or smart home system, or anything else.

Such communication equipment preferably comprises at least a communication unit, and preferably an application unit. The application unit is in particular the general controlling instance which controls the communication unit in order to achieve connectivity, e.g. with a remote server. The application unit preferably fulfills more tasks concerning the general purpose of the communication equipment, e.g. measuring data, selling goods, tracking assets, controlling actuating unit etc.

The inventive method relates to a communication equipment which is configured to handle emergency messages. Such emergency messages are in particular those relating to the Earthquake and Tsunami Warning System (ETWS). Other emergency messages, including proprietary ones are also encompassed. Preferably such emergency messages are provided by the base node through broadcast channels, as they are foreseen to be received by each and every communication equipment operating in the area where an emergency situation is imminent. In particular the communication equipment do not necessarily have to operate in connected mode in order to receive such emergency messages.

Hence it suffices that the communication equipment is registered in the cellular network and camping on one of the plurality of base nodes of the cellular network.

In the situation that an emergency message is launched from the cellular network for broadcast from at least one base node, all communication equipments camping on the base nodes have the opportunity to receive the emergency message, by carrying out a paging and decoding the broadcast channel, in case any information is available.

As the inventive method relates preferably to M2M devices, it is advantageous that only those communication equipments, which are capable of handling the emergency message, process the emergency message. If not, it is even preferably - in particular when operating with a battery - not to listen on such emergency messages on broadcast channels.

All other communication equipments according to the invention receive the emergency message and in response carry out the following steps.

The first step is an analysis of the emergency message. This analysis in particular comprises reading out of a warning type of the emergency message. Preferably emergency messages are composed of a couple of information fields comprising information describing the emergency situation where the emergency message shall warn of. For the ETWS it is in particular the warning type, a warning message, an indication of an impacted area and a time period, which is provided with the emergency message. With respect to the warning type, this is defined to provide an indication relating to the type of emergency situation which is reported with the emergency message. Common examples of emergency situations are in particular an earthquake, a tsunami, flooding, dangerous air pollution (e.g. due to chemical accidents, caused by industry and high traffic), hurricanes/thunderstorms, forest fire, bomb warnings, e.g. due to terrorist attacks or bomb disposal), police/fire department/presidential alerts etc.

Depending of the origin of the emergency message, the warning type comprises the indication by way of a text field and additionally or alternatively as a code.

Further the evaluation of the emergency message preferably comprises additional steps. As such the time period and/or impacted area as well as the warning text are preferably analyzed in order to identify further information, like urgency or severity of the emergency message.

Such information are in particular useful to define what type of handling action is requested and/or how this handling action is carried out.

Based on the warning type the communication equipment is now in the position to carry out measures in response to the respective warning type. While a mobile handset simply displays the content of the emergency message on the display, for M2M devices a more elaborate handling is desirable.

For doing so the communication equipment accesses a capability profile stored in a memory unit, preferably being part of the communication equipment. The capability profile is in particular a collection of datasets that each at least creates a relationship between warning types and handling actions. Such handling actions are preferably operations that the communication equipment is able to carry out.

In a preferred embodiment said handling action is at least one out of the group of
- acoustical signalling,
- optical signalling,
- sending instructions to connected actuating equipment,
- shutting down of the communication equipment.

Preferably in case of an acoustic and/or optical signalling the communication equipment is equipped with respective actuating unit, in particular a horn, beeper or alarm siren for the acoustic signalling, or an LED or other flash light for an optical signalling. Further more elaborate signal emitting units could be used, that in particular provide acoustically a predefined tone sequence or melody or optical flashing patterns. Such sequence or patterns are preferably assigned to different types of messages resp. warning types. In any case, the capability profile needs to reflect the handling actions the communication equipment is capable of and preferably assign to a certain warning type a certain activation of that handling action.

Consequently with such capability profile a communication equipment is configured that way that e.g. for an earthquake warning a warning sound is played by a beeper, while for a smog warning a flash light is activated.

In another preferred embodiment it is proposed that the set of handling actions comprises suppressing of the emergency message.

Further it is advantageous to suppress emergency messages if nothing is to do for a special device. In particular in case of an emergency message with a warning type, which has assigned no handling action in the capability profile, it is the expected behavior of the communication equipment to do nothing in case of such emergency message.

In particular an elevator preferably does not need to react in any way in the case of air pollution.

Further it is proposed that the handling action comprises a plurality of operations. This means, that for a warning type a chain of handling actions is defined. Such handling actions itself might further comprise a couple of operations that need to be executed in a certain order.

Further it is preferable to delay handling actions resp. operations. E.g. in case first a certain handling action needs to be carried out, like safely shutting down an actuator, and then switching off the plug.

The actuation unit then is preferably configured to analyze the information relating to the emergency message and to initiate handling actions to at least a part of the reachable actuators. Such actuators are in particular controllable components of a smart home, like automatic gates, door, window, electric shutters, elevators, light installations, as well as controllable plugs.

Further it is foreseen as one particular handling action to shut down the communication equipment. This is in particular advantageous in case where the operation of the communication equipment could harm the communication equipment itself or other persons or devices. This is in particular the case in relationship with electricity e.g. in case of flooding. Just switching off the plug would potentially not lead to a safe stop of the communication equipment.

According to another preferred embodiment it is proposed that the capability profile further comprises for at least one capability of the communication equipment at least one stored handling action assigned for at least one representation of a warning type.

According to that the single capabilities of the communication equipment are managed by the capability profile.

The capabilities in particular relate to certain actuating units connected resp. being part of the communication equipment. An actuating unit is able to execute at least one handling action. Hence, with the capability profile the handling action for a certain warning type is assigned to the capability, which directly relates to the actuating unit.

In particular it is foreseen to send an instruction to initiate a handling action to a connected actuating unit.

An actuating equipment is a device which is wired or wirelessly connected to the communication equipment and preferably further in communication relationship with further actuators. This is in particular true for a controlling server which has a signalling connection to an actuation equipment. Hence, in case of an emergency message with a specific warning type, the actuating equipment is informed about the retrieved emergency message.

A least two different scenarios are foreseen as part of the invention. The first comprises, that the communication equipment sends an indication relating to the emergency message to the actuation equipment. This is preferably the case when the communication equipment is aware of actuators connected to the actuation equipment which are capable of carrying out handling actions as indicated in the capability profile stored in the communication equipment. The second scenario comprises the knowledge of the presently reachable actuators only in the actuation equipment. Hence, the communication equipment forwards the relevant information from the emergency message, in particular the whole emergency message, to the actuation equipment. Hence, the capability profile of the communication equipment comprises a record which indicates that all or at least a subset of the emergency messages are forwarded to the actuation equipment. Other handling actions of the communication equipment might still be initiated in response to the emergency message in parallel.

In a further preferred embodiment it is proposed that the capability profile is preconfigured during first startup of the communication equipment.

The capability profile is according to this embodiment dynamically assigned to the communication equipment. With that it does not need to be identified during production time what kind of capabilities the communication equipment will finally have.

According to the second aspect of the invention it is proposed a communication equipment for communicating with a cellular network by means of a base node, the communication equipment is camping on, the communication equipment comprising a memory unit wherein at least one capability profile, comprising a set of handling actions, is stored, the communication equipment being configured to:
- receive an emergency message from the cellular network,
- to identify in response of the reception a warning type from the emergency message,
- to select based on said warning type from the stored capability profile a handling action, and
- to initiate the selected handling action.

The second aspect shares the advantages of the first aspect.

It is in particular suggested a communication equipment comprising a communication unit and an application unit, wherein the communication unit comprises said memory unit, communication unit and application unit are connected and provide a command interface, wherein the application unit is configured to provide via the command interface information relating to handling actions of a capability profile, and the communication unit is configured to submit via the command interface a message relating to the handling action, that is selected in response to the identification of a warning type.

With this embodiment it is suggested a specific architecture of the communication equipment. It comprises a communication unit, which is the component which provides all means for carrying out communication operations with a cellular network. In particular this is implemented by way of a wireless module.

The communication unit typically comprises a baseband processor, and access to an antenna. It is further suggested to comprise a memory unit. This memory unit is in particular used for storing the capability profile of the communication equipment.

Further the communication equipment comprises an application unit. That is usually the controlling part of the communication equipment and comprises an application processor which sends instructions and receives responses and notifications from all internal and peripheral components of the communication equipment, including the communication unit.

The application unit and the communication unit are connected via a command interface. It is common practice to use the quasi standard AT-interface between both units. This command interface allows the application unit to send instructions to the communication unit, in particular AT-commands, but also to let the communication unit notify the application unit about incoming events, in particular an emergency message, by way of an unsolicited result code.

It is according to the proposed embodiment suggested that the application unit is configured to provide via the command interface information relating to handling actions of the capability profile. Such information are in particular those which define which handling actions the application unit is configured to carry out.

According to a preferred embodiment it is suggested that the application unit is configured to provide to the communication unit information relating to handling actions belonging to an initial capability profile upon first startup of the communication equipment.

Hence this information is provided to the communication unit on the first startup, preferably through the command interface.

Preferably the information relating to handling actions comprises for which warning type a handling action is supposed to be carried out. Additionally it is advantageous to further add a capability of the application unit.

Whenever the communication unit receives such information from the application unit, it is configured to store them in the capability profile within the memory unit.

Hence, when an emergency message is received at the communication unit, the communication unit is in the position to figure out, by means of the stored capability profile, which handling actions are supposed to be carried out. Consequently the communication unit submits a message via the command interface to the application unit, indicating at least one of the handling actions stored in the capability profile.

As it is assured, that the capability profile only comprises handling actions, the application unit can carry out, then the handling action indicated in the message received at the application unit can be carried out.

In a preferred embodiment the communication equipment is operated without an interactive user interface.

This embodiment distinguishes the type of communication equipment first from common mobile handsets, where the emergency message is simple displayed on the user interface.

Instead according to this embodiment the communication equipment has other means for carrying out handling actions for respective emergency messages received from the cellular network.

According to the third aspect the invention it is proposed a system comprising a communication equipment, a controlling server and at least one actuating equipment, wherein the communication equipment and the controlling server are connected via a signalling connection, and the at least one actuating equipment is controlled via the controlling server, wherein the communication equipment is configured to send an emergency instruction to the controlling server in response to a received emergency message, and the controlling server is configured to receive said instruction, and in response to send a control signal to the at least one actuating equipment, and the actuating equipment is configured to carry out at least one instruction being part of said control signal.

The system according to this aspect of the invention incorporates a communication equipment according to the second aspect of the invention which is configured to communicate on the one hand with a cellular network and on the other hand with a controlling server.

Such controlling server is in particular a Smart Home Server or the like, which has signalling connections to at least one actuating equipment. Such actuating equipment is a device or installation which operation is generally controlled by the controlling server. In the field of connected home or Internet of Things (IoT) such connected objects are getting more and more widespread.

As such it is foreseen, that in response to an emergency message the communication equipment informs the controlling server with an emergency instruction about reception of the emergency message. For that the communication equipment in particular holds in the capability profile the information to send for each emergency message an emergency instruction to the controlling server. Other additional handling actions might also be foreseen.

It is advantageous if the emergency instruction comprises at least parts of the emergency message. Further handling actions or other additional information are preferably added.

At the controlling server the emergency instruction is received. In a simple embodiment in response to the reception of the emergency instruction a control signal is submitted to at least one connected actuating equipment. This control signal instructs the actuating equipment to carry out an instruction which is submitted with the control signal.

Alternatively the communication equipment knows about the available actuating equipments of the controlling server, in particular through the capability profile, and hence can provide with the emergency instruction singular handling actions for at least one of the actuating equipments. Alternatively the controlling server comprises a matching algorithm which is used to decide to which connected actuating equipment an instruction is submitted, and if so, what instruction.

This is in particular advantageous as different actuating equipments like elevators, doors and shutters have the ability to execute different operations. These operations are in particular even different depending upon the type of emergency instructions, in particular the warning type. E.g. in case of flooding it is advantageous to close e.g. a garage door, while it is recommended to open it in case of an earthquake in order to allow people to leave the building.

In a further preferred embodiment it is proposed that on occasion of a second actuating equipment connecting to the controlling server the controlling server is configured to provide a actuator registration message to the communication equipment comprising information relating to the second actuating equipment and its capabilities, and wherein the communication equipment is configured to update in response to receiving said actuator registration message said capability profile.

In this advantageous embodiment the system is set up as a dynamic system. This includes, that each actuating equipment which is connected to the controlling server, either on first installation or after activating e.g. in case of maintenance, registers at the system as connected actuating equipment. Such registration further includes the capabilities of the actuating equipment. The communication equipment is informed about each actuating equipment that has registered at the control server and its capabilities. Hence the communication equipment can when an emergency message is received, send instructions to the controlling server resp. the actuating equipments and initiate to carry out certain handling actions. That is only possible when the communication equipment has the knowledge about which actuating equipments are in reach.

Further it is suggested to also delete capabilities from the capability profile of the communication equipment when an actuating equipment is deregistered, switched off or not properly in service.

As it is shown this invention advantageously solves the depicted problem and suggests a method and a communication equipment for properly handling of emergency messages in a machine-to-machine environment.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents a communication equipment of the type to which the present invention is applied as an embodiment;
- Fig. 2: shows a flow diagram indicating the workflow of an embodiment of the invention;
- Fig. 3: represents a system of the type to which another aspect of present invention is applied as an embodiment;
- Fig. 4: represents a flow diagram indicating the workflow of another embodiment of present invention.

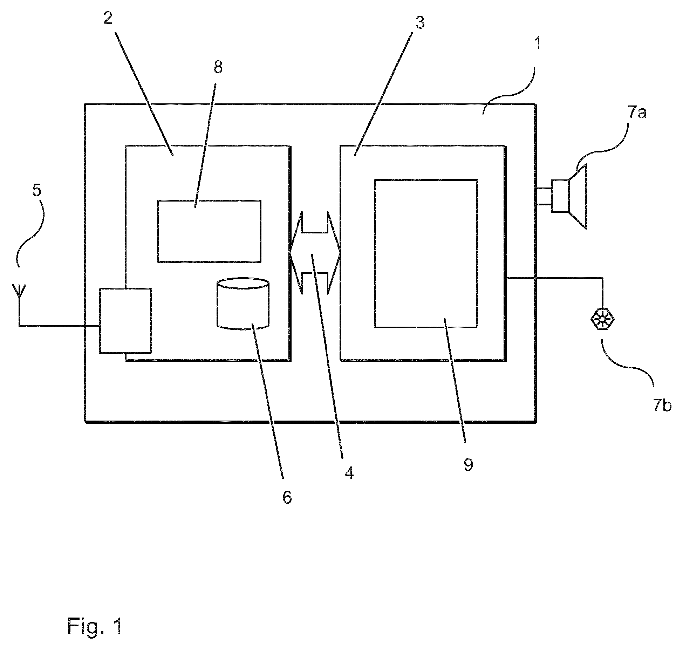

FIG. 1 schematically shows a communication equipment 1 of the type to which the present invention is applied as an embodiment.

The communication equipment 1 of the exemplary embodiment is in particular a machine-to-machine-device, e.g. an electricity meter, home security device or an elevator control device.

It is composed of the two main components communication unit 2 and application unit 3. The application unit 3 takes the controlling role of the communication equipment. It in particular controls the activities of the communication unit 2. In particular the communication unit 2 is implemented as wireless module. Further components, like an antenna 5 and a SIM card etc. are further needed, but not all displayed for the sake of clarity.

The application unit 3 further provides actuator units 7. Here it is displayed a loudspeaker 7a, preferably in the range beeper or a siren, and a flash light 7b. By way of example this is a very simple setup, hence more actuating units 7 could be foreseen like an elevator, a door resp. shutter, an electric plug etc.

Other generic actuator units could also be foreseen like a GPIO (general purpose input/output connector), where other actuating devices are connected and wait for a signal.

The application unit 3 controls the communication unit by means of the command interface 4. This command interface is in particular an AT-interface, but also functional call interfaces are foreseen and encompassed as part of the invention.

The communication unit 2 further comprises a memory unit 6. Said memory unit 6 is capable of storing the capability profile for the communication equipment. The memory unit 6 is in particular a permanent memory. Nevertheless the content of the permanent memory is preferably during runtime read in the volatile memory (resp. the RAM) of the communication unit.

That capability profile is in particular structured as a searchable table which in this exemplifying embodiment comprises at least three columns as shown in the following example:

| **Capability** | **Warning Type** | **Handling Action** |
|---|---|---|
| **HasScreen** | Any | Display Message on Screen |
| **HasHorn** | Any | Activate Horn |
| **HasLight** | Earthquake | Blink slow |
| **HasLight** | Tsunami | Blink fast |
| **IsMoving** | Earthquake, Tsunami | Stop moving |
| **HasDoor** | Tsunami | Close Door |
| **HasDoor** | Earthquake | Open Door |
| **DangerOf-ElectricShock** | Flooding, Tsunami | Power down |
| **HasControllablePlug** | Earthquake, Tsunami | Switch Off |

This exemplifying table shows which capabilities are available in a certain communication equipment 1. It further assigns to a capability a warning type and for the combination of both a handling action.

Hence, should an emergency message with a specific warning type appear, then from the table it can be evaluated which capabilities for the warning type is present and which handling action is to be conducted.

In this example for the capability "hasLight", which for the communication equipment shown in FIG. 1 would relate the actuating unit flash light 7b, two handling actions are registered in the capability profile. Depending upon the warning type one of the two handling actions is carried out: for an earthquake the handling action "blink slow" is initiated, for a tsunami the handling action "blink fast" is initiated.

Should an emergency message with the warning type "Flooding" be received, then the flash light 7b is not handled at all. Instead a power down is carried out. Depending upon the type of communication equipment the power down could relate to a special actuating unit.

Further this table comprises handling actions for a remotely controllable plug. This is in particular relevant in normal apartments, where a lot of damages as a result from earthquakes happen due to the fact, that people quickly leave the apartment without switching off certain devices, like stoves. Hence, in case of an earthquake it is desirable to switch off stoves, by switching off the respective plugs, in particular high voltage sockets. Such plugs are registered with the capability "HasControllablePlug".

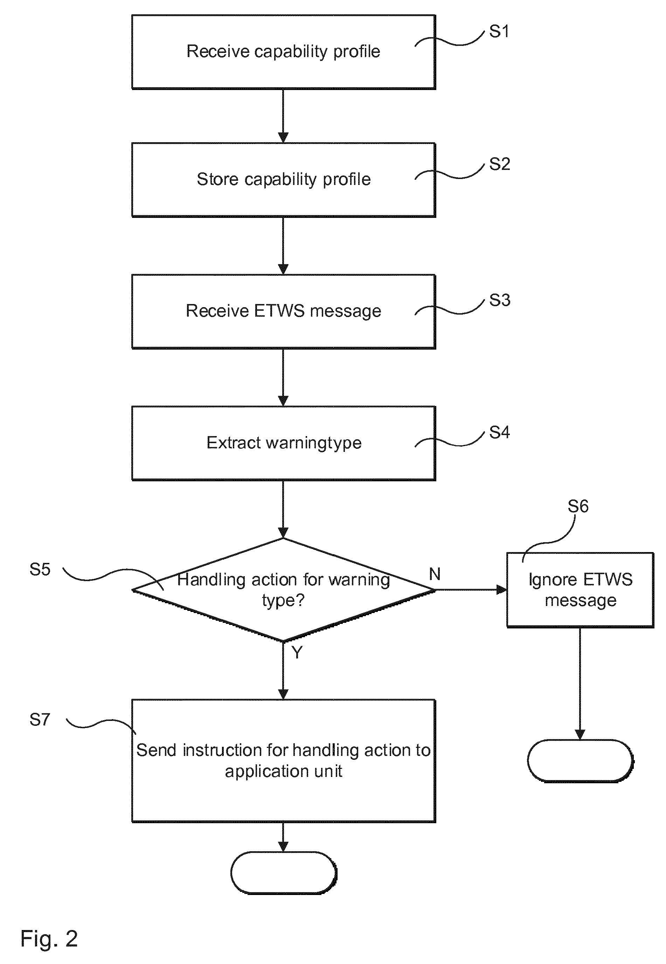

FIG. 2 illustrates with a flow chart an exemplifying process flow of the inventive method.

The process flow starts with an initializing step S1 of the communication equipment, which receives a capability profile. Preferably it is according to FIG. 1 the communication unit 1 which receives the capability profile from the application unit 2 upon first startup. In response in step S2 the capability profile is stored in the memory unit 6.

Typically the communication equipment is operating afterwards in its designated function, like control of a shutter or an elevator.

The process of handling an emergency message starts with step S3, where an ETWS message is received by the communication equipment, in particular by the communication unit. Such an ETWS message is one example of an emergency message. It is in particular defined in the ETSI standard and as such all devices are configured to handle them accordingly. Nevertheless other types of emergency messages, e.g. in relationship with emergency call (eCall) or some non-standard messages are also encompassed by this embodiment.

Following the reception of the emergency message, the communication equipment is in the following evaluating the received emergency message and take the necessary steps.

First in step S4 the communication equipment analyzes the emergency message for a warning type. Generally as a warning type an indication is provided with the emergency message which needs to be resolved.

When the warning type is extracted or derived from the emergency message, it is then evaluated in conjunction with the capability profile. If the capability profile is structured like the table shown before, then in the decision step S5 it is to check if for the extracted warning type a handling action is assigned.

If this is not the case, than the process flow branches along the NO-path to step S6, which comprises to ignore the emergency message.

Otherwise the process flow branches along the Yes-Path to step S7. This step is carried out for each occurrence of a handling action listed in the capability profile. In this step the identified handling action is initiated.

This in particular means to send an instruction to the application unit. This instruction tells the application unit to carry out the related handling action. This means in particular that certain actuator units are activated resp. instructed to carry out a certain action. In particular this means that the flash light is supposed to blink slow, or to activate the siren.

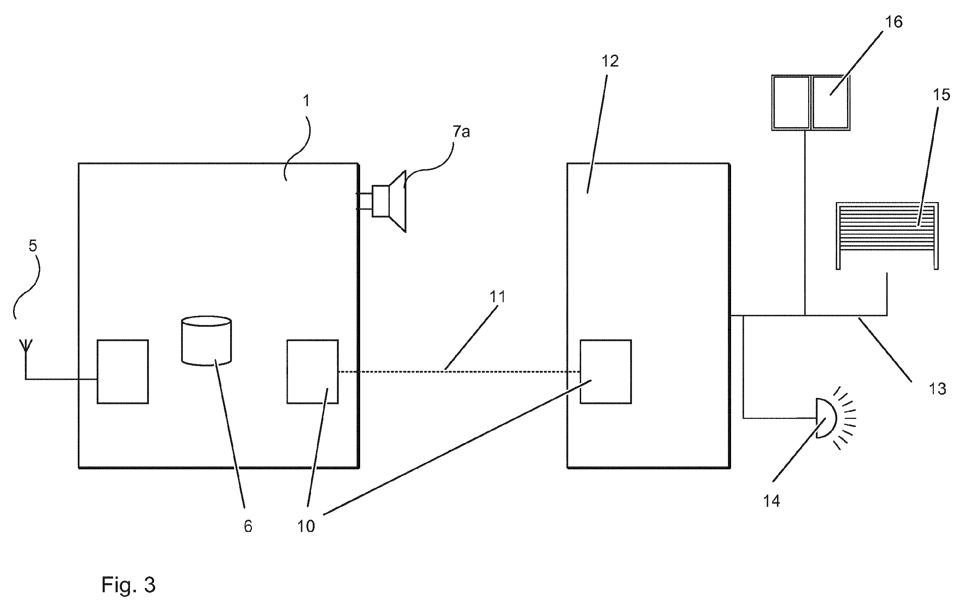

A further exemplifying embodiment of the inventive system is shown in FIG. 3. It comprises also a communication equipment 1 comprising an antenna 5, a memory unit 6 for storing the capability profile and an actuation unit, here a loudspeaker 7a.

Additionally it comprises a connection 11 to a controlling server 12. The connection 11 is in particular a bidirectional wired e.g. power line connection with the respective power line transceivers 10 on both ends.

The controlling server 12 is in particular a smart home server. It has the task to control via a signalling connection 13 further actuation equipment. Here it is shown a siren 14, a roller shutter 15 and a window 16.

The signalling connection 13 to the actuation equipment is additionally wired or wireless, in particular short range technology, like Zigbee, Wifi, ZWave or the like.

Typically such controlling server has general smart controlling tasks, e.g. closing window shutters in the evening, switch on / off lights, etc.

Each of the actuation equipments is configured to receive instructions from the controlling server 12. It is further envisaged that at least some of the actuation equipments are acting as sensors. E.g. for an automatic door it is advantageous to inform the controlling server 12 about each manual operation and or other sensoring results, like an interrupted light barrier. These sensoring information are taken into account by the controlling server 12 in order to instruct this or another actuating equipment to carry out different handling actions or in another way. E.g. when a car is standing below a roller shutter in a light barrier, then the roller shutter sends this signal to the controlling server. This advantageously stops closing of the roller shutter and instead initiates another siren or optical warning or sends an information to a service station nearby, in order to remove the obstacle from the roller shutter.

In order to initiate a handling action on one of the actuating equipments in case of an emergency message, the communication equipment 1 first needs to have knowledge about such actuating equipments. For that it is preferred that at the time of installation or activation the respective actuating equipment registers at the controlling server 12. The controlling server then sends via connection 11 a signal to the communication equipment 1 indicating the availability of the actuating equipment, and preferably the capabilities and the preference to carry out handling actions in response to certain warning types. The communication equipment in response stores such information in the memory unit 6 resp. the stored capability profile.

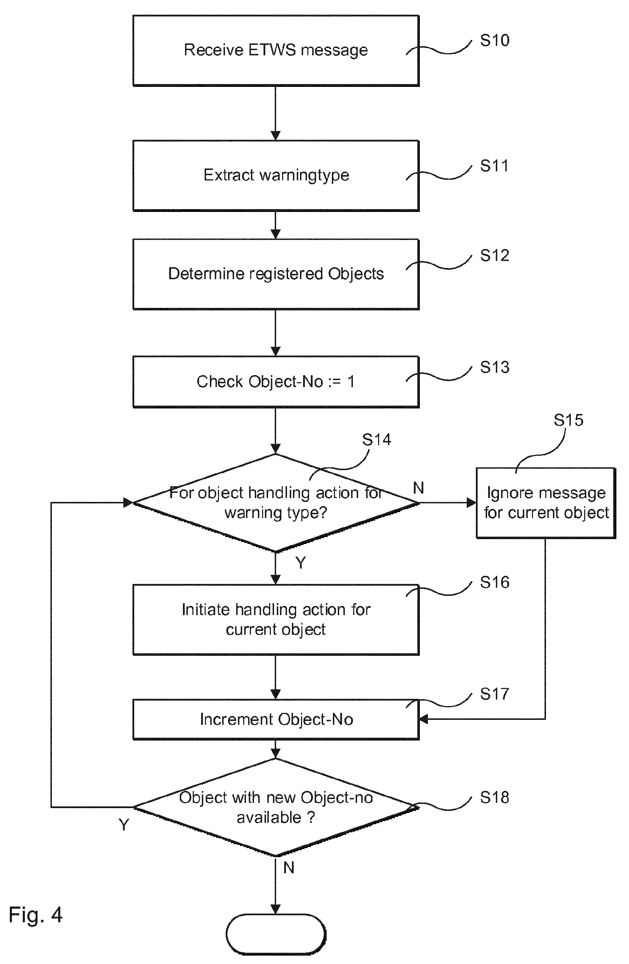

It is further advantageous to inform the communication equipment 1 in case of deregistration of the actuation equipment from the controlling server 12. The exemplifying process flow when an emergency message arrives at the communication equipment is shown in FIG. 4. This process flow preferably relates to a system as shown in FIG. 3.

The process flow starts with step S10, where an emergency message resp. ETWS message is received at the communication equipment. Like before, the analysis of the received emergency message in step S11 reveals the warning type of the emergency message. Additionally additional information are extracted, in particular a combination of parameter, e.g. in terms of origin, severity, reliability, urgency etc. is encompassed by this embodiment. Such severity could be the force of an earthquake, or water level over normal. Further contributory information are in particular part of this analysis step, which are evaluated with further local information. E.g. with local knowledge of the current geographical position of the communication equipment it is possible to derive from an emergency message comprising an affected position or area the urgency of the emergency warning. That means, if the current position of the communication equipment lies exactly in the affected area of an earthquake, then the communication equipment can derive a higher urgency.

For evaluating which handling actions are supposed to be carried out, in this embodiment it is first determined in step S12 which objects, that means in particular actuation units or equipments, are available to which a handling action could be send.

This is advantageous in particular for a dynamic system configuration as indicated for the embodiment shown in FIG. 3. Hence, after the registered objects are determined, each object needs to be checked for the possibility to send a handling action.

So the handling starts in iterating over the candidate list with step S13. For each object it is in step S14 then checked if a handling action for the received warning type is available. In particular if the shutter 15 registers as capable of closing the door in the case of a flooding emergency message, then this is detected in this step.

If for an object no handling type is available, the process flow branches to step S15, where the message is ignored for the current object.

Otherwise the process flow branches along the Yes-path to step S16, where the handling action is initiated for the current object. This in particular means, that the communication equipment sends an instruction to the controlling server, to instruct the current object to carry out the handling action. As an example the communication equipment could initiate the controlling server to instruct the shutter to close.

The handling action further preferably includes an indication of the determined severity of the emergency situation, where the controlling server or the addressed actuation unit or equipment can distinguish what handling action is carried out and how it is carried out. This in particular means in relation to the actuation unit, that a siren is operating louder or with a different signal, as well as a flash light takes different RGB color schemes, blinking interval etc.

With the steps S17 and S18 the iteration is closed, by incrementing the running object number and checking if more objects are available.

As it can be seen by the shown embodiments, the proposed invention solves in a flexible way the problem of how to handle such emergency messages in machine-to-machine devices and suggest advantageous options for increasing the safety of the users.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for handling emergency messages received by a communication equipment (1) from a base node, where the communication equipment is camping on the base node being part of a cellular network, the communication equipment comprising a memory unit (6) wherein at least one capability profile, comprising a set of handling actions, is stored, comprising the steps, upon receiving of an emergency message at the communication equipment, of:
- identifying a warning type from the emergency message,
- selecting based on said warning type from the stored capability profile a handling action,
- initiating the selected handling action.

2. Method according to claim 1,
wherein said handling action is at least one out of the group of
- acoustical signalling,
- optical signalling,
- sending instructions to a connected actuating equipment,
- shutting down of the communication equipment (1).

3. Method according to claim 1,
wherein the set of handling actions comprises suppressing of the emergency message.

4. Method according to at least one of the previous claims
wherein the handling action comprises a plurality of operations.

5. Method according to at least one of the previous claims,
wherein the capability profile further comprises for at least one capability of the communication equipment (1) at least one stored handling action assigned for at least one representation of a warning type.

6. Method according to at least one of the previous claims,
wherein the capability profile is preconfigured during first startup of the communication equipment.

7. Communication equipment (1) for communicating with a cellular network by means of a base node, the communication equipment is camping on,
the communication equipment comprising a memory unit (6) wherein at least one capability profile, comprising a set of handling actions, is stored,
the communication equipment being configured to:
- receive an emergency message from the cellular network,
- to identify in response of the reception a warning type from the emergency message,
- to select based on said warning type from the stored capability profile a handling action, and
- to initiate the selected handling action.

8. Communication equipment according to claim 7,
comprising a communication unit (2) and an application unit (3), wherein the communication unit comprises said memory unit, communication unit and application unit are connected and provide a command interface (4), wherein the application unit is configured to provide via the command interface information relating to handling actions of a capability profile,
and the communication unit is configured to submit via the command interface a message relating to the handling action, that is selected in response to the identification of a warning type.

9. Communication equipment (1) according to claim 8,
wherein the application unit (3) is configured to provide to the communication unit (2) information relating to handling actions belonging to an initial capability profile upon first startup of the communication equipment.

10. Communication equipment (1) according at least one of the claims 7 to 9, wherein the communication equipment (1) is operated without an interactive user interface.

11. Communication equipment (1) according to at least one of the claims 7 to 10,
the communication equipment further comprising a connected actuator unit (7) comprising at least one capability,
wherein the capability profile further comprises for the at least one capability at least one stored handling action assigned for at least one representation of a warning type.

12. Communication equipment (1) according to at least one of the claims 7 to 11,
wherein said handling action is at least one of the group of
- acoustical signalling,
- optical signalling,
- sending instructions to a connected actuator unit (7),
- shutting down of the communication equipment,
- suppressing of the emergency message.

13. Communication equipment (1) according to at least one of the claims 7 to 12
wherein the handling action comprises a plurality of operations.

14. System comprising a communication equipment (1) according to claim 7, a controlling server (12) and at least one actuating equipment (14, 15, 16), wherein the communication equipment and the controlling server are connected via a signalling connection (13), and the at least one actuating equipment is controlled via the controlling server,
wherein the communication equipment is configured to send an emergency instruction to the controlling server in response to a received emergency message,
and the controlling server is configured to receive said instruction, and in response to send a control signal to the at least one actuating equipment, and the actuating equipment is configured to carry out at least one instruction being part of said control signal.

15. System according to claim 14,
wherein on occasion of a second actuating equipment connecting to the controlling server (12) the controlling server is configured to provide a actuator registration message to the communication equipment (1) comprising information relating to the second actuating equipment and its capabilities,
and wherein the communication equipment is configured to update in response to receiving said actuator registration message said capability profile.
